# EUROPÄISCHE PATENTSCHRIFT

(11) **EP 0 403 954 B1**
(45) Veröffentlichungstag und Bekanntmachung des Hinweises auf die Patenterteilung: **18.05.1994**
(21) Anmeldenummer: 90111216.9
(22) Anmeldetag: 13.06.1990
(51) Int. Cl.: B61L 1/14, G01S 13/91, B61L 21/06, G01S 13/87

(54) **Einrichtung zur Gleisfreimeldung im Eisenbahnwesen**
Clear track signalling device for railways
Dispositif de signalisation de voie libre pour les chemins de fer

(30) Priorität: 20.06.1989 DE 3920154
(43) Veröffentlichungstag der Anmeldung: 27.12.1990
(73) Patentinhaber: SIEMENS AKTIENGESELLSCHAFT, 80333 München (DE)
(72) Erfinder: von Pieverling, Klaus, Dr.-Ing., D-8190 Wolfratshausen (DE); Ritter, Gerhard, Dipl.-Ing., D-8911 Thaining (DE)

(56) Entgegenhaltungen:
- EP-A- 0 112 444
- DE-A- 2 902 238
- DE-A- 3 235 733
- DE-A- 3 306 040
- US-A- 3 422 429

## Beschreibung

Die Erfindung bezieht sich auf eine Einrichtung zur Gleisfreimeldung im Eisenbahnwesen, bei der zu überwachende Gleisabschnitte durch Zuglängenmeldeeinrichtungen begrenzt sind, welche jeweils die jeweilige Zuglänge aufgrund einer Bewertung der mit Hilfe eines Radargerätes ermittelten Zuggeschwindigkeit berechnen. Eine derartige Einrichtung ist aus DE-A-32 35 733 bekannt.

Zur Gleisfreimeldung im Eisenbahnsicherungswesen werden häufig Achszähleinrichtungen verwendet mit elektronischen Impulsgebern, die sich jeweils am Anfang und am Ende von sich aneinanderreihenden Gleisabschnitten vorgegebener Länge befinden. Die elektronischen Impulsgeber bestehen vielfach aus einer auf der einen Seite einer Eisenbahnschiene zwischen dem Schienenkopf und dem Schienenfuß angeordneten Sendespule, die mit Wechselstrom gespeist wird, und einer mit dieser Sendespule zusammenwirkenden Empfangsspule. Laufkränze der Fahrzeugräder, welche diese Spulenanordnung passieren, verändern die Kopplung zwischen der Sende- und der Empfangsspule derart, daß sich die Empfangsspannung erhöht. Diese Nutzempfangsspannung wird einer Auswerteeinrichtung zugeführt, die sie bewertet. Hieraus resultieren schließlich die für Achszählzwecke erforderlichen Impulse.

Vielfältige Untersuchungen bezüglich unterschiedlichster Störeinflüsse bei derartigen Anordnungen haben ergeben, daß besonders schnelle Änderungen von magnetischen Fremdfeldern am Ort der Empfangsspulen unerwünschte Spannungen induzieren, die unter Umständen zu Fehlzählungen führen können. Diese störenden elektromagnetischen Beeinflussungen sind u. a. auf neuartige Triebfahrzeuge mit Tyristorsteuerung zurückzuführen und natürlich auch durch den Anstieg der Traktionsleistung ganz allgemein gegeben.

Die bekannte Einrichtung (DE-A-32 35 733) der obengenannten Art beschreibt neue technische Wege zur Gleisüberwachung beliebig langer Gleisabschnitte, die an die Fahrzeuge keinerlei Anforderungen hinsichtlich der Radbeschaffenheit stellt und völlig unabhängig von über die Fahrschienen fließenden Traktionsströmen ist. So werden Meldeeinrichtungen vorgesehen, welche die jeweilige Zuglänge ermitteln, und zwar mit Hilfe von Radargeräten, welche zunächst einmal die Fahrgeschwindigkeit der Züge feststellen. Durch Integrieren des über die Dauer der jeweiligen Beeinflussung des Radargerätes gebildeten Geschwindigkeitsmeßwertes wird die Länge des am Radargerät vorbeifahrenden Zuges ermittelt. Schließlich kann durch Vergleich festgestellt werden, daß ein Zug vorgegebener Länge einen Gleisabschnitt verlassen hat, wenn die in Fahrrichtung gesehen am Anfangspunkt festgestellte Zuglänge mit demjenigen Wert übereinstimmt, der am Ende desselben Abschnittes ermittelt wurde.

Diese bekannte Einrichtung zur Gleisfreimeldung unter Verwendung von Radargeräten hat jedoch den Nachteil, daß je nach Anordnung mehrerer Gleise parallel zueinander Meßunsicherheiten eintreten können, welche die Sicherheit der Gleisfreimeldung beeinträchtigen. Um dies zu vermeiden, werden am Anfang und am Ende der Gleisabschnitte über eine begrenzte Länge des jeweiligen Gleisabschnittes wirksame zusätzliche Gleisfreimeldeeinrichtungen erforderlich, deren Informationen mit Hilfe signaltechnisch sicherer Vergleicher mit weiteren Meldungen verarbeitet werden müssen.

Der Erfindung liegt die Aufgabe zugrunde, die bisherigen Meßunsicherheiten der bekannten Anlagen und den zur Beseitigung dieser Meßunsicherheiten bisher erforderlichen Aufwand zu vermeiden.

Erfindungsgemäß wird die Aufgabe dadurch gelöst, daß jedes Radargerät aus einem modulierten Radarsender besteht, der eine erste, senkrecht auf die passierenden Züge strahlende Sende-Empfangsantenne und eine zweite in Fahrrichtung unter einem vorgegebenen Winkel schräg auf die Züge gerichteten zweiten Sende-Empfangsantenne speist, daß empfangsseitig an die erste Antenne über einen Schwellendiskriminator und eine Entfernungswerte bestimmende Baugruppe ein Einkanaldiskriminator angeschlossen ist, der beim Vorliegen von Entfernungswerten in einem vorgegebenen Bereich einen elektronischen Schalter schließt, daß empfangsseitig an die zweite Antenne über eine weitere Entfernungswerte bestimmende Baugruppe und einen weiteren Einkanaldiskriminator das die Zuggeschwindigkeit berechnende Gerät angeschlossen ist, dessen Ausgangssignale über den elektronischen Schalter das die Zuglänge bestimmende Gerät speisen.

Das Besondere dieser erfindungsgemäßen Lösung liegt darin, daß die über zwei Sende-Empfangsantennen jedes Radargerätes geführten Signale unterschiedliche Aufgaben lösen, wobei sichergestellt ist, daß ausschließlich nur solche reflektierten Signale zu einer Informationsauswertung einen Beitrag liefern können, deren Reflexion in einem vorgegebenen Entfernungsbereich erfolgte. Alle anderen reflektierten Signale werden elektronisch ausgeblendet und können somit nicht mehr wie bei früheren bekannten Einrichtungen zu fehlerhaften Gleisfreimeldungen führen.

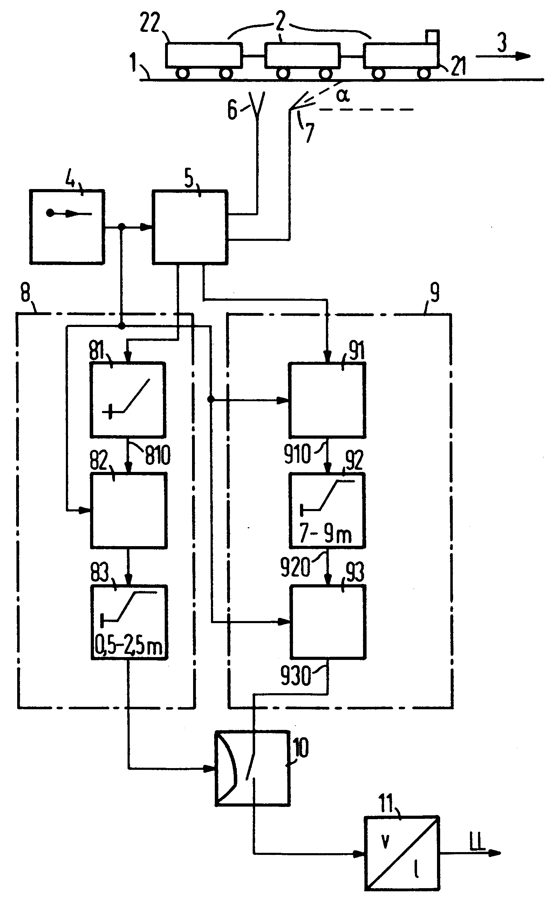

Ein Ausführungsbeispiel der Erfindung ist in der Zeichnung als Blockschaltbild dargestellt und wird nachfolgend näher erläutert.

Das Blockschaltbild einer Einrichtung zur Gleisfreimeldung im Eisenbahnwesen zeigt die Komponenten einer Zuglängenmeldeeinrichtung, die an einem Gleis 1 vorgesehen ist. Dieses wird durch einen Zug 2 in Fahrrichtung 3 befahren. Ein vorzugsweise pulsmodulierter Radarsender 4 speist einen Koppler 5, an den zwei Sende-Empfangsantennen, z. B. Hornstrahler, 6 und 7 angeschlossen sind. Die Sende-Empfangsantenne 6, die senkrecht auf die vorbeifahrenden Züge 2 gerichtet ist, hat die Aufgabe, reflektierte Radarstrahlen, die von dieser Antenne zunächst ausgingen, wieder zu empfangen. Diese Echosignale werden dann in einer Auswerteschaltung 8 in ein den Zuganfang 21 bzw. das Zugende 22 charakterisierendes Signal umgewandelt. Die Sende-Empfangsantenne 7 ist unter einem vorgegebenen Winkel α schräg in Fahrrichtung 3 auf die vorbeifahrenden Züge 2 gerichtet. Die von dieser Antenne 7 ausgehende und wieder empfangene Radarstrahlung wird in einer ebenfalls an den Koppler 5 angeschlossenen weiteren Auswerteschaltung 9 in Signale umgesetzt, welche besonders die jeweilige Zuggeschwindigkeit repräsentieren.

Die Sende-Empfangsantenne 6 ist im Bereich des Gleises 1 so angebracht, daß der Zug 2 etwa im Abstand von 2 m vorbeifährt. Die von der Sende-Empfangsantenne 7 ausgehenden Radarstrahlen werden aufgrund der Anordnung der Antenne 7 am Gleis etwa nach dem Durchlaufen einer Strecke von 8 m vom Zug reflektiert. Bei einer derartigen Anordnung der Antennen wird davon ausgegangen, daß die von der Sende- Empfangsantenne 6 aufgenommenen Signale nur dann ausgewertet werden, wenn sie durch passierende Züge 2 reflektiert wurden im Abstandsbereich 0,5 bis 2,5 m von der Sendeantenne 6. Entsprechendes gilt sinngemäß für durch die Sende-Empfangsantenne 7 aufgenommenen reflektierten Signale aus einem Entfernungsbereich von 7 bis 9 m.

Die Auswerteschaltung 8 ist einerseits an den Koppler 5 und andererseits an den Ausgang des pulsmodulierten Radarsenders 4 angeschlossen. In einem Schwellendiskriminator 81 wird praktisch die Empfangsechostärke mit einem Schwellenwert verglichen, so daß am Ausgang 810 des Schwellendiskriminators 81 erst dann elektrische Signale vorhanden sind, wenn eine ausreichende Empfangsechostärke vorliegt. Diese Signale werden zusammen mit den Signalen des Radarsenders 4 einer Entfernungswerte bestimmenden Baugruppe 82 zugeführt. Derartige Geräte sind bekannt und brauchen daher nicht näher erläutert zu werden. Der in der Baugruppe 82 jeweils ermittelte Entfernungswert wird einem nachgeordneten Einkanaldiskriminator 83 zugeführt. Dieser hat die Aufgabe zu prüfen, ob der jeweilige Entfernungswert im Bereich von 0,5 bis 2,5 m liegt. Ist dies der Fall, kann davon ausgegangen werden, daß die von der Sende-Empfangsantenne 6 aufgenommenen Echosignale durch einen im vorgegebenen Abstand von 2 m passierenden Zug 2 stammen. Andere Echosignale von weiter entfernt vorbeifahrenden Zügen werden somit in vorteilhafter Weise ausgeblendet. An den Einkanaldiskriminator 83 ist schließlich ein elektronischer Schalter 10 angeschlossen, der praktisch beim Passieren des Zuganfangs 21 an der Sende-Empfangsantenne 6 geschlossen wird und solange geschlossen bleibt, bis das Zugende 22 den Einwirkbereich der Sende-Empfangsantenne 6 wieder verlassen hat.

Die weitere Auswerteschaltung 9 hat, wie bereits oben kurz angedeutet wurde, die Aufgabe, immer dann Zuggeschwindigkeitswerte auszugeben, wenn die zu deren Berechnung erforderlichen Echosignale aus einem Entfernungsbereich 7 bis 9 m stammen. Die weitere Auswerteschaltung 9 weist zunächst eine Entfernungswerte bestimmende Baugruppe 91 auf, die einerseits an den Koppler 5 und andererseits an den Ausgang des pulsmodulierten Radarsenders 4 angeschlossen ist. Die über den Ausgang 910 abgegebenen Signale werden einem weiteren Einkanaldiskriminator 92 zugeführt, der nur dann Ausgangssignale abgibt, wenn der Entfernungswert im Bereich von 7 bis 9 m liegt. Die über den Ausgang 920 des Einkanaldiskriminators 92 abgegebenen Signale enthalten Informationen, die geeignet sind, in einem die Zuggeschwindigkeit berechnenden nachgeordneten Gerät 93 unter Zusatz der vom pulsmodulierten Radarsender 4 abgegebenen Signale umgesetzt zu werden. Die so ermittelten Zuggeschwindigkeitswerte gehören zweifelsfrei ausschließlich zu solchen Zügen 2, die im Abstand von 8 m an der Sende-Empfangsantenne 7 im vorgegebenen Winkel α vorbeifuhren. Geschwindigkeitswerte von Fahrzeugen mit anderen Abständen zur Sende-Empfangsantenne 7 werden nicht ausgegeben und können somit auch keinen Beitrag zu fehlerhaften Zuglängenermittlungen liefern. Derartige Geräte sind seit langem bekannt und werden daher an dieser Stelle nicht weiter beschrieben. Über den Ausgang 930 gelangt der Wert der Zuggeschwindigkeit auf den elektronischen Schalter 10, der die zugeführten Signale im geschlossenen Zustand, also während der Zeitdauer des Passierens des Zuges 2 an den Antennen 6 / 7, weiterleitet auf ein die Zuglänge bestimmendes Gerät 11. Die Ermittlung der jeweiligen Zuglänge erfolgt praktisch durch einen bekannten Integrationsvorgang. Der berechnete Wert der Zuglänge gelangt schließlich über eine Ausgangsleitung LL auf nicht weiter dargestellte Einrichtungen zur Überwachung von Gleisabschnitten durch Vergleich der am Anfang bzw. Ende des betreffenden Gleisabschnittes ermittelten Zuglängen.

Das Ausführungsbeispiel kann in vieler Hinsicht variiert werden. Der Radarsender 4 kann z. B. auch mit FM-CW-Modulation arbeiten. Die vom Einkanaldiskriminator 83 abgegebenen Signale können in vorteilhafter Weise auch zur Bestimmung des jeweiligen Zugprofils verwendet werden. Hieraus ergibt sich die Möglichkeit, außer der Zuglänge auch signifikante Profiländerungen zu vergleichen.

## Patentansprüche

1. Einrichtung zur Gleisfreimeldung im Eisenbahnwesen, bei der zu überwachende Gleisabschnitte durch Zuglängenmeldeeinrichtungen begrenzt sind, welche jeweils die jeweilige Zuglänge aufgrund einer Bewertung der mit Hilfe eines Radargerätes ermittelten Zuggeschwindigkeit berechnen, **dadurch gekennzeichnet,** daß jedes Radargerät aus einem modulierten Radarsender (4) besteht, der eine erste, senkrecht auf die passierenden Züge (2) strahlende Sende-Empfangsantenne (6) und eine zweite in Fahrrichtung (3) unter einem vorgegebenen Winkel (α) schräg auf die Züge (2) gerichteten zweiten Sende-Empfangsantenne (7) speist, daß empfangsseitig an die erste Antenne (6) über einen Schwellendiskriminator (81) und eine Entfernungswerte bestimmende Baugruppe (82) ein Einkanaldiskriminator (83) angeschlossen ist, der beim Vorliegen von Entfernungswerten in einem vorgegebenen Bereich einen elektronischen Schalter (10) schließt, daß empfangsseitig an die zweite Antenne (7) über eine weitere Entfernungswerte bestimmende Baugruppe (91) und einen weiteren Einkanaldiskriminator (92) das die Zuggeschwindigkeit berechnenden Gerät (93) angeschlossen ist, dessen Ausgangssignale über den elektronischen Schalter (10) das die Zuglänge bestimmende Gerät (11) speisen.

2. Einrichtung nach Anspruch 1, **dadurch gekennzeichnet,** daß pulsmodulierte Radarsender (4) verwendet werden.

3. Einrichtung nach Anspruch 1 oder 2, **dadurch gekennzeichnet,** daß die vom erstgenannten Einkanaldiskriminator (83) abgegebenen Signale zur Bestimmung des Zugprofils verwendet sind.

## Claims

1. Device for signalling clear tracks in railways, in which track sections which are to be monitored are delimited by train length-signalling devices which, in each case, calculate the respective train length on the basis of an evaluation of the train speed determined with the aid of a radar device, characterised in that each radar device consists of a modulated radar transmitter (4) which feeds a first transmit-receive antenna (6) radiating perpendicularly relative to the passing trains (2) and a second transmit-receive antenna (7) which is directed obliquely relative to the trains (2) at a preset angle (α) in the direction of travel (3), in that connected to the receiving side of the first antenna (6) by way of a threshold discriminator (81) and an assembly (82) which determines distance values there is a single-channel discriminator (83) which closes an electronic switch (10) given the presence of distance values within a preset range, in that connected to the receiving side of the second antenna (7) by way of a further assembly (91) determining further distance values and a further single-channel discriminator (92) there is the device (93) which calculates the train speed and the output signals of which, by way of the electronic switch (10), feed the device (11) which determines the train length.

2. Device according to claim 1, characterised in that pulse-modulated radar transmitters (4) are used.

3. Device according to claim 1 or 2, characterised in that the signals emitted from the first-mentioned single-channel discriminator (83) are used to determine the train profile.

## Revendications

1. Dispositif de signalisation de voie libre dans les chemins de fer, dans lequel des sections de voie devant être contrôlées sont limitées par des dispositifs de signalisation de longueur de train, qui calculent respectivement la longueur respective d'un train sur la base d'une évaluation de la vitesse du train déterminée à l'aide d'un appareil radar, caractérisé par le fait que chaque appareil radar est constitué par un émetteur radar modulé (4), qui alimente une première antenne d'émission-réception (6), qui réalise une émission perpendiculairement aux trains (2) qui passent, et une seconde antenne d'émission-réception (7), qui est dirigée dans la direction de déplacement (3) sous un angle prédéterminé (α) obliquement par rapport aux trains (2), que sur le côté réception, à la première antenne (6) est raccordé, par l'intermédiaire d'un discriminateur à seuil (81) et d'un module (82) déterminant des valeurs d'éloignement, un discriminateur monocanal (83) qui, dans le cas de la présence de valeurs d'éloignement dans une gamme prédéterminée ferme un interrupteur électronique (10), que sur le côté réception, à la seconde antenne (7) est raccordé, par l'intermédiaire d'un autre module (91) déterminant des valeurs d'éloignement, et d'un autre discriminateur monocanal (92) l'appareil (93) qui calcule la vitesse du train et dont les signaux de sortie alimentent, par l'intermédiaire de l'interrupteur électronique (10), l'appareil (11) qui détermine la longueur du train.

2. Procédé suivant la revendication 1, caractérisé par le fait qu'on utilise des émetteurs radar (4) modulés selon une modulation par impulsions.

3. Procédé suivant la revendication 1 ou 2, caractérisé par le fait que les signaux délivrés par le discriminateur monocanal (83) indiqué en premier lieu sont utilisés pour la détermination du profil du train.
